# EUROPÄISCHE PATENTSCHRIFT

(11) **EP 0 657 268 B1**
(45) Veröffentlichungstag und Bekanntmachung des Hinweises auf die Patenterteilung: **26.05.1999**
(21) Anmeldenummer: 94117073.0
(22) Anmeldetag: 28.10.1994
(51) Int. Cl.: B29C 45/16

(54) **Verfahren und Vorrichtung zum Spritzgiessen von mehrschichtigen Gegenständen**
Method and apparatus for injection moulding of multilayered articles
Procédé et dispositif de moulage par injection d'articles multicouches

(30) Priorität: 05.11.1993 DE 4337829; 01.12.1993 DE 4340990
(43) Veröffentlichungstag der Anmeldung: 14.06.1995
(73) Patentinhaber: Battenfeld GmbH, D-58540 Meinerzhagen (DE)
(72) Erfinder:
(74) Vertreter: Müller, Gerd, Dipl.-Ing.

(56) Entgegenhaltungen:
- WO-A-93/17855
- DE-A- 1 965 368
- DE-A- 2 045 362
- DE-A- 2 259 818
- DE-A- 2 461 925
- DE-A- 3 539 088
- DE-A- 4 300 334
- FR-A- 2 276 161
- GB-A- 2 013 132
- GB-A- 2 080 187
- AUTOMOTIVE ENGINEER, Bd. 19, Nr. 2, April 1993 - Mai 1993 BURY ST. EDMUNDS GB, Seiten 28-29, 'Vehicle and systems manufacturers are increasingly making it with plastics'

## Beschreibung

Die Erfindung betrifft eine Vorrichtung zum Spritzgießen von mindestens aus zwei unterschiedlichen Schichten bestehenden Gegenständen, bei der einem Formwerkzeug mindestens ein Hauptspritzaggregat mit einer das Spritzgießen mehrschichtiger Gegenstände erlaubenden, eine Spritzdüse umfassenden Spritzeinheit vorgeschaltet ist.

Aus der Veröffentlichung "Automotive Engineer", Bd. 19, Nr. 2, April/Mai 1993, Bury St. Edmunds, GB, Seiten 28 und 29 ist eine Zwei-Kanal-Spritzgießtechnik mit einer gattungsgemäßen Vorrichtung bekannt. Eine Spritzgußmaschine zum Herstellen von Zweikomponenten-Formteilen besitzt dort zwei Spritzaggregate, von denen jeweils ein Zuführkanal an eine ihnen gemeinsame, eine außerhalb der Düsenplatte angeordnete Spritzdüse umfassenden Spritzeinheit führt. Die Spritzdüse liegt mit ihrer Mündung einem Formwerkzeug an, das einen Formhohlraum bzw. ein Formnest einschließt. Die nach diesem bekannten Zwei-Kanal- oder Mehrkomponenten-Spritzgießverfahren hergestellten Formteile weisen immer einen dreischichtigen Aufbau auf, d.h. von einer zur anderen Seite ergibt sich der Aufbau Haut/Kern/Haut. Bei den mit der eingangs genannten Spritzgießtechnik hergestellten Mehrkomponenten-Formteilen besteht die Außenhaut bzw. -schicht aus Lack, wobei es sich bei dem einen der über die Zuführkanäle zugeführten Schmelzeströme um einen thermoplastischen Pulverlack handeln kann. Unabhängig von der jeweils eingesetzten Spritztechnik ist der z.B. zu Reinigungszwecken erforderliche Aufwand beim Ausbau der Düsen bzw. Düsenkörper sehr groß.

Der Erfindung liegt die Aufgabe zugrunde, eine gattungsgemäße Vorrichtung zum Spritzgießen von Mehrkomponenten-Formteilen einfacher zu gestalten, insbesondere die Montage der Düsen zu erleichtern.

Diese Aufgabe wird erfindungsgemäß dadurch gelöst, daß die Spritzeinheit eine Spritzdüse mit von vorne eingesetzten Düsennadeln aufweist. Gegenüber den üblichen Düsenköpfen, bei denen die beiden Düsennadeln für das Haut-und Kernmaterial nur nach hinten, in Richtung auf das Hydraulikteil bzw. die Hydraulikanschlüsse herausgezogen werden können, ist auf diese Weise eine wesentliche Montageerleichterung gegeben; die Düse bzw. der Düsenkörper braucht nicht mehr abgebaut zu werden. Gleichermaßen wird ein schnelles Reinigen der Düseneinsätze ermöglicht.

Eine Ausgestaltung der Erfindung sieht vor, daß die Düsennadeln über Schnellkupplungen mit dem Hydraulikteil verbunden sind. Nach dem Abschrauben des Düsenkopfes liegt ein von vorne freier Zugang zur äußeren Düsennadel vor, und nach dem Lösen der Kupplungen (Klauen-Kupplung, Verschraubung, etc.), die die Verbindung zwischen den mechanischen Düsennadeln und den für die Betätigung erforderlichen Hydrauliken herstellen, kann die äußere Düsennadel nach vorne herausgezogen und dann die innere Düsennadel demontiert werden.

Weitere Merkmale und Vorteile der Erfindung ergeben sich aus den Ansprüchen und der nachfolgenden Beschreibung, in der ein in den Zeichnungen dargestelltes Ausführungsbeispiel der Erfindung anhand der Zwei-Kanal-Spritzgießtechnik näher erläutert ist. Es zeigen:
Figuren 1 bis 3 in schematischer Darstellung die Einspritzfolge einer nach der Zwei-Kanal-Technik zwei unterschiedliche Materialien zu einem Zweikomponenten-Formteil spritzenden Spritzgußmaschine; und
Fig. 4 eine Düseneinheit mit nach vorne herausziehbaren Düsennadeln, im Querschnitt schematisch dargestellt.

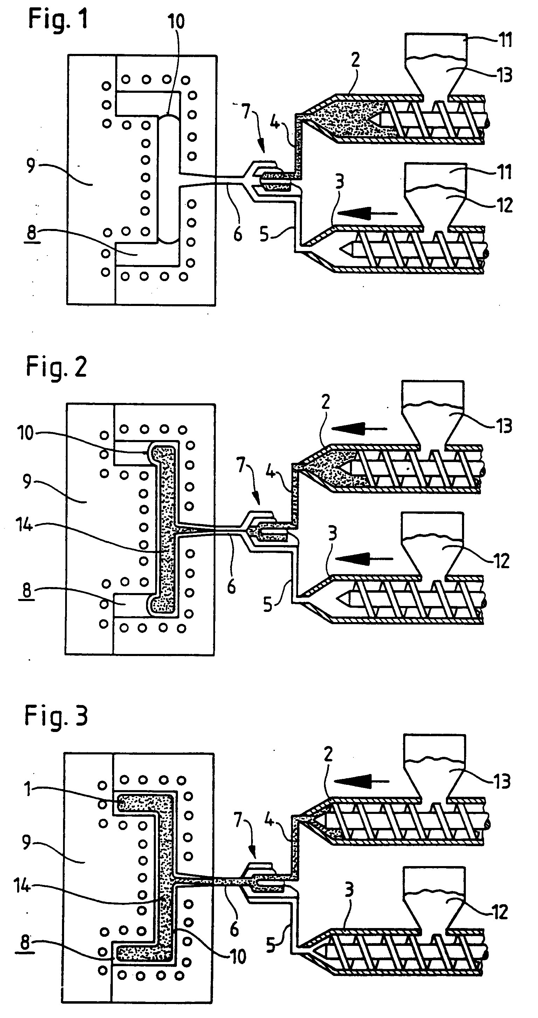

Von einer im einzelnen nicht dargestellten Spritzgußmaschine zum Herstellen von Zweikomponenten-Formteilen 1 (vgl. Fig. 3) sind in den Figuren lediglich die beiden Spritzaggregate 2, 3, von denen jeweils ein Zuführkanal 4 bzw. 5 an eine ihnen gemeinsame, im Ausführungsbeispiel eine außerhalb der Düsenplatte angeordnete Spritzdüse 6 umfassende Spritzeinheit 7 führt, und ein an der Mündung der Spritzdüse 6 anliegendes, einen Formhohlraum bzw. -nest 8 einschließendes Formwerkzeug 9 gezeigt. Zum Herstellen des zweischichtigen Formteils 1 mit einer aus Lack bestehenden Außenschicht bzw. -haut 10 befindet sich in einer Dosiervorrichtung 11 des Spritzaggregates 3 thermoplastischer Pulverlack 12, der in dem Spritzaggregat 3 plastifiziert und als Schmelzestrom über den Zuführkanal 5 in die Spritzeinheit 7 und von dort über die Spritzdüse 6 in das Formnest 8 des Formwerkzeugs 9 gelangt. Dort bildet sich die Außenschicht 10 aus. Während dieser in Fig. 1 gezeigten Phase ist das Spritzaggregat 2, das in ihrer Dosiervorrichtung 11 das Kunststoffmaterial für die Grund- bzw. Kernschicht 14 bevorratet, in Ruhe.

Sobald der Lack 12 für die Außenschicht 1 eingespritzt worden ist, setzt mit mehr oder weniger langer Übergangsphase das Einspritzen von sowohl thermoplastischem Pulverlack 12 als auch Kunststoffmaterial 13 ein, d.h. beide Spritzaggregate 2, 3 sind in Betrieb, was durch die im Gegensatz zu Fig. 1 an beiden Spritzaggregaten 2, 3 voll ausgezeichneten Pfeile verdeutlicht wird. Das Kunststoffmaterial 13 der Kernschicht 14 bzw. der plastifizierte Schmelzestrom des Kunststoffmaterials 13 ist in den Figuren zur Verdeutlichung gegenüber dem Schmelzestrom des Lacks gepunktet hervorgehoben. Die Phase des gemeinsamen Einspritzens von Pulverlack 12 und Kunststoffmaterial 13 kann länger oder kürzer und sollte auf jeden Fall so ausgelegt sein, daß sich ein möglichst übergangsloses Umschalten von Haut- auf Kernmaterial erreichen läßt.

In dar in Fig. 3 gezeigten letzten Betriebsphase wird dann nur noch das Kunststoffmaterial 13 der Kernschicht 14 eingespritzt (vgl. den oberhalb des Spritzaggregates 2 voll ausgezeichneten Pfeil), bis das Formnest 8 vollständig mit dem Kern- bzw.. Kunststoffmaterial 13 gefüllt ist. Nach dem Aushärten des Formteils 1 brauchen danach lediglich die Formhälften des Formwerkzeuges 9 geöffnet zu werden, so daß sich das fertige Formteil 1 ausstoßen läßt. Dieses besteht dann aus einer Kernschicht 14 aus Kunststoff und einer Außenschicht 10 aus einem thermoplastischen Pulverlack 12. Neben der konkret beschriebenen Ausführung eignen sich zum Herstellen des Mehrkomponenten-Formteils 1 insbesondere auch die weiteren bekannten, zum Teil eingangs genannten, gegebenenfalls miteinander zu kombinierenden Spritzgießverfahrenbzw. Spritzgußmaschinen, auf deren Darstellung wegen ihres Bekanntseins hier verzichtet worden ist; weiterhin können die für die Herstellung von Mehrschichtformteilen geeigneten bzw. bekannten Werkzeugdüsen die Funktion der Spritzdüse 6 übernehmen.

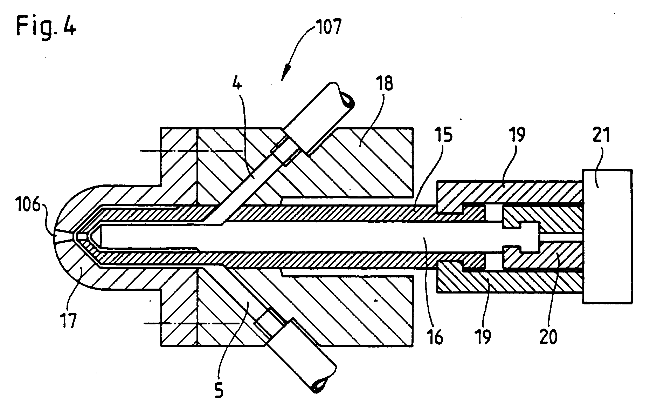

Die in Fig. 4 dargestellte erfindungsgemäße Spritzeinheit 107 ist mit nach vorne herausziehbaren Düsennadeln 15,16 versehen, und ohne eine komplette Demontage zu erfordern, ist auf einfache Weise eine Reinigung oder ein Austausch der Düseneinsätze der Spritzdüse 106 möglich. Es braucht lediglich der Düsenkopf 17 von dem Düsenkörper 18 abgeschraubt zu werden, um einen von vorne freien Zugang zu den Düsennadeln 15,16 zu schaffen. Sowohl die äußere als auch die innere Düsennadel 15 bzw. 16 ist über Schnellkupplungen 19,20 mit einem für ihre Betätigung erforderlichen, schematisch als black-box angedeuteten Hydraulikteil 21 verbunden. Nach dem Lösen der Schnellkupplungen 19,20 kann zunächst die äußere Düsennadel 15 zusammen mit der inneren Düsennadel 16 aus dem Düsenkörper 18 und anschließend die innere Düsennadel 15 aus der äußeren Düsennadel 16 herausgezogen werden.

## Patentansprüche

1. Vorrichtung zum Spritzgießen von mindestens aus zwei unterschiedlichen Schichten bestehenden Gegenständen (1), bei der einem Formwerkzeug (9) mindestens ein Hauptspritzaggregat (2; 3) mit einer das Spritzgießen mehrschichtiger Gegenstände erlaubenden, eine Spritzdüse (6; 106) umfassenden Spritzeinheit (7; 107) vorgeschaltet ist,
**dadurch gekennzeichnet,**
daß die Spritzeinheit (107) eine Spritzdüse (106) mit von vorne eingesetzten Düsennadeln (15, 16) aufweist.

2. Vorrichtung nach Anspruch 1,
**dadurch gekennzeichnet,**
daß die Düsennadeln (15, 16) über Schnellkupplungen (19, 20) mit einem Hydraulikteil (21) verbunden sind.

## Claims

1. Device for injection moulding of articles (1) consisting of at least two different layers, in which at least one main injection apparatus (2; 3) with an injection unit (7; 107), which permits injection-moulding of multi-layer articles and comprises an injection nozzle (6; 106), is connected upstream of a mould tool (9), characterised in that the injection unit (107) has an injection nozzle (106) with nozzle needles (15, 16) inserted from the front.

2. Device according to claim 1, characterised in that the nozzle needles (15, 16) are connected with a hydraulic part (21) by way of quick-action couplings (19, 20).

## Revendications

1. Dispositif de moulage par injection d'articles (1) constitués par au moins deux couches différentes, dans lequel un outil de moulage (9) est précédé d'au moins une machine d'injection principale (2; 3) présentant une unité d'injection (7;107) permettant le moulage par injection d'articles à plusieurs couches et comprenant un gicleur d'injection (6;106), caractérisé en ce que l'unité d'injection (107) présente un gicleur d'injection (106) qui comporte des aiguilles d'injection (15, 16) montées à partir de l'avant.

2. Dispositif selon la revendication 1, caractérisé en ce que les aiguilles d'injection (15, 16) sont reliées via des raccords rapides (19, 20) à une partie hydraulique (21).
